# FASCICULE DE BREVET EUROPEEN

(11) **EP 2 528 836 B1**
(45) Date de publication et mention de la délivrance du brevet: **20.11.2013**
(21) Numéro de dépôt: 10809279.2
(22) Date de dépôt: 15.12.2010
(51) Int. Cl.: B62D 25/06, B62D 25/07

(54) **VEHICULE DOTE D'UN TOIT PANORAMIQUE TRANSPARENT ET D'UN PAVILLON ARRIERE ETANCHE**
FAHRZEUG MIT TRANSPARENTEM PANORAMADACH UND GESCHLOSSENEM HECKDACH
VEHICLE HAVING A TRANSPARENT PANORAMIC ROOF AND A SEALED REAR ROOF

(30) Priorité: 28.01.2010 FR 1050576
(43) Date de publication de la demande: 05.12.2012
(73) Titulaire: Peugeot Citroën Automobiles SA, 78140 Vélizy Villacoublay (FR)
(72) Inventeur: BOUCHY, Laurent, F-91590 Baulne (FR)
(74) Mandataire: Fosse, Danièle
(86) Numéro de dépôt international: PCT/FR2010/052753
(87) Numéro de publication internationale: WO 2011/092385

(56) Documents cités:
- EP-A2- 1 759 960
- WO-A1-2008/129181

## Description

Le domaine technique de l'invention concerne le milieu de l'industrie automobile, et, plus particulièrement, les véhicules automobiles dotés d'un pavillon, prolongé vers l'avant, par un toit transparent panoramique. Plus précisément, les véhicules selon l'invention, qui possèdent ces éléments, sont légèrement modifiés pour favoriser l'écoulement de l'eau de pluie, sur les cotés, par redimensionnement du pavillon et des pièces support servant à arrimer le toit sur la structure, et par une adaptation des techniques de liaison dudit pavillon et desdites pièces support sur ladite structure.

Les véhicules automobiles disposant d'une structure de toit conformée pour permettre une évacuation d'eau, existent et ont déjà fait l'objet de brevet. On peut, par exemple, citer le brevet EP1759960, qui se rapporte à un véhicule automobile doté d'une structure de toit, dont le toit est en verre. Ledit toit est entouré de parties moulées, qui vont former, avec un cache, une gouttière d'évacuation d'eau. A l'extrémité de cette gouttière, une partie inclinée permet de compenser la différence de hauteur, entre le fond de la gouttière et le plan supérieur.

Les véhicules automobiles existants, et qui sont munis d'un pavillon, prolongés vers r l'avant par un toit panoramique transparent, laissent apparaitre, sur chacun des deux cotés de cette structure de toit, deux cuvettes de rétention d'eau. En effet, chaque bord latéral du pavillon, est soudé par laser à chaque coté d'habitacle du véhicule, tandis que chacune des deux pièces support du toit transparent, permettant d'arrimer ledit toit sur la structure du véhicule, est classiquement soudée par points, sur le coté d'habitacle lui correspondant. Cette différence de technique de soudage, entraine des formes de pièces, qui font apparaitre une rigole longitudinale entre chaque coté d'habitacle et chaque pièce support, qui est obturée par une partie du pavillon, qui émerge transversalement de chaque pièce support. Cette obturation, engendre une cavité apte à récupérer et à accumuler de l'eau de pluie, susceptible de se déverser, à chaque coup de frein, sur le pare-brise, ce ruissellement soudain, pouvant s'avérer gênant et potentiellement dangereux pour le conducteur. L'invention se rapporte donc à des véhicules automobiles, dont le pavillon et chaque pièce support du toit, ont été redimensionnées pour supprimer ces cuvettes de rétention d'eau, ce redimensionnement s'accompagnant d'une technique de soudage adaptée, autorisant des formes de pièces propices à la mise en oeuvre d'un conduit d'évacuation d'eau fonctionnel.

Dans un souci de clarté, il faut préciser que chaque véhicule automobile selon l'invention, met en oeuvre un pavillon, un toit panoramique transparent, deux pièces support et deux cotés d'habitacle, chaque pièce support permettant d'arrimer le toit sur chaque coté d'habitacle.

La présente invention a pour objet un véhicule automobile doté d'un pavillon arrière comprenant deux bords latéraux, soudés par laser à chacun des deux coté d'habitacle, ledit pavillon étant prolongé vers l'avant par un toit panoramique transparent, solidarisé à chaque coté d'habitacle par une pièce support, soudée audit coté d'habitacle de manière à former avec celui-ci, une première gorge longitudinale. La principale caractéristique d'un véhicule automobile selon l'invention, est que les deux bords latéraux du pavillon, forment, avec le coté d'habitacle, une deuxième gorge longitudinale, se retrouvant dans le prolongement de ladite première gorge, de façon à former un conduit d'évacuation d'eau continu, le pavillon et ladite pièce support étant soudés par laser au coté d'habitacle, avec le même cordon, et étant au contact l'un de l'autre. Autrement dit, la géométrie du pavillon est modifiée pour faire apparaitre, avec chaque coté d'habitacle, une deuxième gorge, prolongeant la première gorge créée entre chaque pièce support et chaque coté d'habitacle, l'association de ces deux gorges permettant d'élaborer un conduit d'évacuation d'eau continu. De façon à simplifier le montage du pavillon et des deux pièces support sur chaque coté d'habitacle, chaque bord latéral du pavillon et chaque pièce support sont soudés par laser sur ledit coté d'habitacle, avec le même cordon, au moyen donc d'une seule opération. La création de la deuxième gorge, ainsi que son dimensionnement et son agencement avec la première gorge, n'est rendue industriellement possible, qu'à travers une seule opération de soudage laser.

Avantageusement, les fonds de la première et de la deuxième gorge sont plans, et sont parfaitement alignés l'un par rapport à l'autre, de manière a ne présenter aucune cassure. En effet, une différence de niveau de ces fonds de gorges, pourrait engendrer un relief plus ou moins marqué, pouvant constituer un obstacle, dont les conséquences pourraient être de retenir de l'eau de pluie. Il est donc nécessaire de lisser le fond du conduit d'évacuation, afin de favoriser l'écoulement d'eau.

De façon préférentielle, le pavillon présente un corps principal et deux bords latéraux, joints chacun audit corps par un segment sensiblement vertical, chacun desdits bords latéraux se retrouvant à une altitude inférieure à celle dudit corps, et matérialisant le fond de la deuxième gorge. Il s'agit de la principale modification structurelle du pavillon, pour créer avec les cotés d'habitacle, ces deuxièmes gorges.

Avantageusement, les bords latéraux et le corps principal du pavillon, sont plans et sensiblement horizontaux.

Préférentiellement, chaque coté d'habitacle présente un segment qui émerge du bord latéral du pavillon, de manière à constituer une paroi de la deuxième gorge, chaque bord latéral du pavillon étant soudé par laser, audit segment émergeant du coté d'habitacle. Autrement dit, chaque deuxième gorge, est délimitée par un bord latéral horizontal du pavillon, constituant son fond, par un segment reliant ledit bord latéral au corps principal du pavillon, et par un segment du coté d'habitacle. Une configuration particulière de cette gorge, est qu'elle possède une section transversale en forme de U, dont un segment vertical et le fond appartiendraient au pavillon, et dont l'autre segment vertical appartiendrait au coté d'habitacle.

De façon avantageuse, chaque pièce support présente une face surélevée sensiblement horizontale, et une face inférieure, sensiblement horizontale, et située sous la face surélevée, lesdites faces étant reliées entre elles par un bord sensiblement vertical, et ladite face inférieure constituant le fond de la première gorge. Le bord sensiblement vertical est assimilable à une paroi plane. Une configuration particulière de cette pièce support, est qu'elle possède une section transversale possédant deux segments rectilignes, parallèles entre eux, et reliés par un segment qui leur est perpendiculaire.

Avantageusement, chaque coté d'habitacle présente un segment qui émerge de la face inférieure de la pièce support, de manière à constituer une paroi de la première gorge, chaque face inférieure étant soudée par laser, audit segment émergeant du coté d'habitacle, avec le même cordon que celui utilisé pour solidariser chaque bord latéral du pavillon audit coté d'habitacle.

De façon préférentielle, chaque pièce support présente une zone de raccordement avec le pavillon et le coté d'habitacle, cette zone permettant de former la première gorge, et la longueur de ladite zone étant inférieure à la longueur totale de ladite pièce support. La longueur est la dimension de la pièce support prise selon l'axe longitudinal du véhicule.

Préférentiellement, le reste de la pièce support, qui ne définit pas la première gorge, est solidarisée au coté d'habitacle, par une soudure par points.

Les véhicules automobiles selon l'invention, présentent l'avantage de pouvoir évacuer l'eau de pluie, par deux rigoles latérales et longitudinales, au moyen d'une technique d'assemblage des pièces impliquées, faisant appel à du soudage laser, cette technique étant largement éprouvée et bien maitrisée. De plus, les véhicules selon l'invention, demeurent d'un coût à peu près constant, car l'usinage des pièces pour permettre de les adapter à cette technique de soudage laser, est simple et rapide.

On donne ci-après une description détaillée d'un mode de réalisation préféré d'un véhicule selon l'invention, en se référant aux figures 1 à 5.
- La figure 1 est une vue partielle de coté, d'une partie de la structure d'un véhicule selon l'état de la technique, positionnant un coté d'habitacle par rapport à un pavillon et un toit transparent panoramique.
- La figure 2, montre la jonction entre un pavillon, une pièce support du toit panoramique, et un coté d'habitacle, du véhicule de la figure 1.
- La figure 3, est une vue en coupe transversale simplifiée de la jonction entre un pavillon et un coté d'habitacle d'un véhicule de l'état de la technique.
- La figure 4, est une vue en coupe transversale simplifiée de la jonction entre une pièce support d'un toit panoramique, et un coté d'habitacle, d'un véhicule de l'état de la technique.
- La figure 5 montre la jonction entre un pavillon, une pièce support du toit panoramique, et un coté d'habitacle, d'un véhicule selon l'invention..

Pour une meilleure compréhension de l'invention, il faut préciser que toutes les notions de « longitudinal », « latéral » ou « transversal » mentionnées dans la description ou les revendications, sont à considérer par rapport à l'axe longitudinal du véhicule.

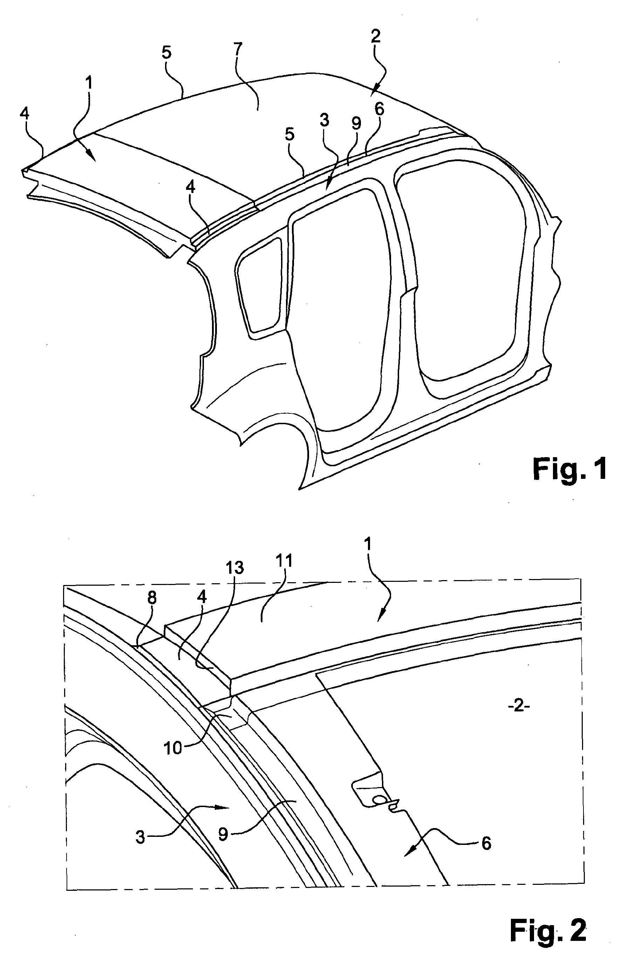

En se référant à la figure 1, un véhicule 1 selon l'état de la technique, comprend un pavillon 1, prolongé vers l'avant par un toit 2 panoramique transparent, ces deux éléments se solidarisant à un coté d'habitacle 3. De façon un peu plus précise, les deux bords latéraux 4 du pavillon 1, sont soudés directement sur les deux cotés 3 d'habitacle du véhicule, tandis que les deux bords latéraux 5 du toit 2 transparent panoramique, sont chacun solidarisés à une pièce support 6, elle-même soudée au coté 3 d'habitacle, lui correspondant. Les véhicules selon l'état de la technique, font apparaitre deux conduits latéraux 9, entre le coté d'habitacle 3 et la pièce support 6, lesdits conduits 9 étant obturés par les deux bords latéraux 4 du pavillon 1, qui débordent latéralement de ces conduits 9. Le pavillon 1 et chacune des deux pièces 6 support sont au contact l'un de l'autre suivant une direction longitudinale du véhicule. La dimension du pavillon 1 prise suivant l'axe longitudinal du véhicule, est inférieure à celle du toit 2 panoramique transparent, dont une partie horizontale 7 prolonge, dans sa continuité, ledit pavillon 1, et dont une partie plus avancée constitue le pare-brise.

En se référant à la figure 2, un véhicule de l'état de la technique rencontre donc un problème au niveau du raccordement entre le pavillon 1 et chacune des pièces support 6 du toit panoramique 2. En effet, chaque bord latéral 4 du pavillon 1 est soudé par laser, directement sur chaque coté d'habitacle 3, au moyen d'un cordon 8 de soudage, tandis que chaque pièce support 6, permettant d'arrimer le toit 2 sur chacun desdits cotés d'habitacle 3, est soudée classiquement par points, en fond de gorge. Il en résulte que le pavillon 1 déborde transversalement de chacune des pièces support 6, et obture ainsi la gorge 9 formée entre la pièce support 6 et le coté d'habitacle 3 lui correspondant. Cette obturation crée une cuvette 10 de rétention d'eau de pluie, qui peut, à chaque coup de frein, être projetée sur le pare-brise, le ruissellement de cette eau sur ledit pare-brise, pouvant s'avérer gênant, voire dangereux, pour le conducteur.

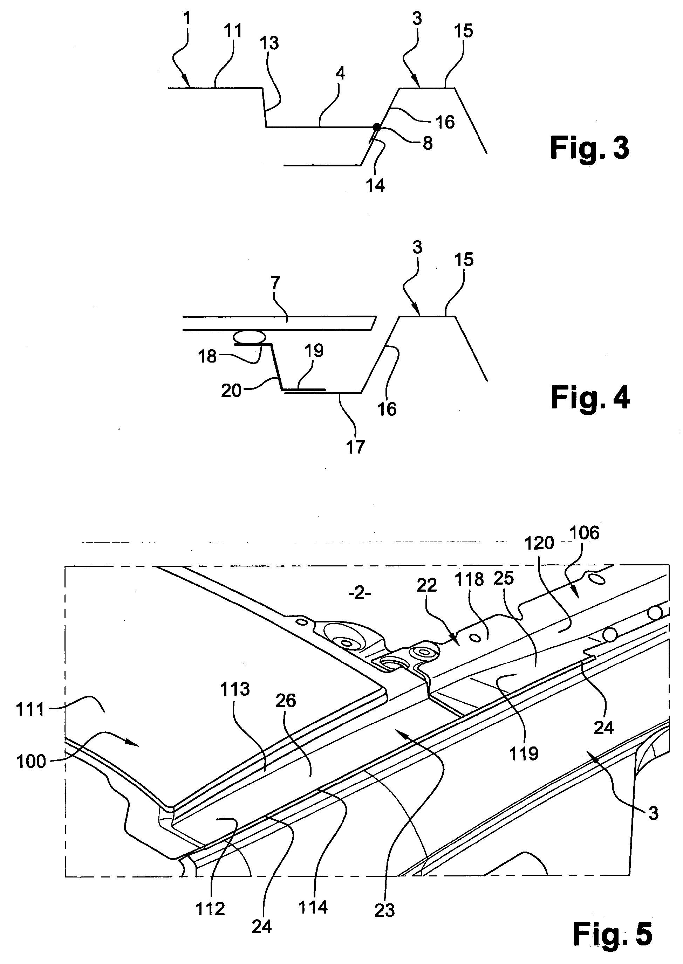

Les figures 3 et 4, permettent d'expliquer l'existence de cette cuvette 10, due principalement aux techniques de soudage différentes, utilisées, d'une part, pour le pavillon 1, et, d'autre part, pour chacune des pièces support 6 du toit 2 panoramique. Comme le montre la figure 3, le pavillon 1 présente un corps principal 11 sensiblement horizontal, et deux bords latéraux 4 sensiblement horizontaux, lesdits bords 4 étant reliés chacun audit corps 11, par un segment sensiblement vertical 13, lesdits bords latéraux 4 se retrouvant à une altitude inférieure à celle du corps 11. Chaque extrémité longitudinale de chaque bord 4 latéral, est repliée, faisant apparaitre un coude 14, d'ouverture angulaire inférieure à 90°. Le coté d'habitacle 3 fait apparaitre une protubérance 15, qui émerge du bord latéral 4 du pavillon 1, et chaque bord latéral 4 dudit pavillon 1, est soudé par laser, au niveau de son coude 14, à un segment 16 de ladite protubérance 15, au moyen d'un cordon de soudage 8. Si l'on se réfère maintenant à la figure 4, chaque pièce support 6 fait apparaitre une face surélevée 18, plane et horizontale, et une face inférieure 19, plane et horizontale, située sous la face 18 surélevée, lesdites faces 18,19 étant reliées entre elles par une face 20 sensiblement verticale. La partie horizontale 7 du toit 2 panoramique transparent, est collée sur la face surélevée 18 de chaque pièce support 6. La vitre 7 du toit panoramique 2 se prolonge transversalement, pour coiffer ladite pièce support 6, et venir affleurer le segment 16 de la protubérance 15 du coté d'habitacle 3, qui émerge de la face 19 inférieure de la pièce support.6. La face inférieure 19 de chaque pièce support 6 est soudée par points sur une face 17 sensiblement horizontale du coté 3 d'habitacle, prolongeant la protubérance 15 en direction du centre du toit 2.

Ainsi, en comparant l'interaction entre les bords latéraux 4 du pavillon 1, avec le coté d'habitacle 3, et l'interaction entre chaque pièce support 6 avec ledit coté d'habitacle 3 lui correspondant, le pavillon 1 étant soudé par laser au moyen d'un cordon 8 de soudage, et les pièces support 6 étant soudées classiquement par points, on entrevoit mieux l'existence d'une cuvette 10 de rétention d'eau, induite par les exigences structurelles des pièces impliquées, découlant des différentes techniques de soudage utilisées. En effet, il en résulte une différence d'altitude entre le bord latéral 4 du pavillon 1, et la face inférieure 19 de la pièce support 6, créant ainsi une marche, venant obturer la gorge 9 formée entre la pièce support 6 et le coté 3 d'habitacle.

En se référant à la figure 5, un véhicule automobile selon l'invention, met en oeuvre un pavillon 100, deux pièces support 106 et un toit transparent panoramique 2, lesdites pièces support 106 étant au contact du pavillon 100. Le pavillon 100 et une partie 22 des pièces support 106 sont usinés, de manière à faire apparaitre, avec le coté d'habitacle 3, un conduit longitudinal et continu 23, d'évacuation de l'eau de pluie, l'existence de ce conduit 23 étant rendu possible grâce au fait, que les deux bords latéraux 112 du pavillon 100 ainsi que les parties 22 des pièces support 106 en contact avec ledit pavillon 100, sont soudés par laser au coté 3 d'habitacle correspondant, au moyen d'un même cordon 24. Le pavillon 100 présente un corps principal 111 sensiblement horizontal, et deux bords latéraux 112 sensiblement horizontaux, lesdits bords 112 étant reliés chacun audit corps 111, par un segment sensiblement vertical 113, lesdits bords latéraux 112 se retrouvant à une altitude inférieure à celle du corps 111. Chaque extrémité longitudinale de chaque bord 112 latéral, est repliée, faisant apparaitre un coude 114, d'ouverture angulaire inférieure à 90°. Lè coté d'habitacle 3 fait apparaitre une protubérance 15, qui émerge du bord latéral 112 du pavillon 100, et chaque bord latéral 112 dudit pavillon 1, est soudé par laser, au niveau de son coude 114, à un segment 16 de ladite protubérance 15, au moyen d'un cordon de soudage 24. Chaque pièce support 106 présente une partie 22 de raccordement avec le pavillon 100, qui fait apparaitre une face surélevée 118 sensiblement horizontale, et une face inférieure 119, sensiblement horizontale, et située sous la face 118 surélevée, lesdites faces 118,119 étant reliées entre elles par une face sensiblement verticale 120. La partie horizontale 7 du toit 2 panoramique transparent, est collée sur la face surélevée 118 de chaque pièce support 106. La vitre 7 du toit panoramique 2 se prolonge transversalement, pour coiffer ladite pièce support 106, et venir affleurer le segment 16 de la protubérance 15 du coté d'habitacle 3, qui émerge de la face inférieure 119.

La partie 22 de raccordement de chaque pièce support 106, qui constitue l'extrémité de chaque pièce support 106 venant au contact du pavillon 100, fait apparaitre, en combinaison avec le coté d'habitacle 3, une première gorge 25. Chaque bord latéral 112 du pavillon 100, définit avec chaque coté d'habitacle 3 lui correspondant, une deuxième gorge 26 se retrouvant en parfaite continuité de la première gorge 25, lesdites gorges 25,26 formant le conduit longitudinal 23 continu, d'évacuation de l'eau de pluie. Les bords latéraux 112 du pavillon 100, ainsi que les faces horizontales inférieures 119 des parties de raccordement 22 des deux pièces support 106, sont soudés par laser sur le coté d'habitacle 3, au moyen du même cordon de soudage 24, et se correspondent parfaitement, afin de rendre lisse le fond du conduit 23 constitué par les deux gorges 25,26, sans introduire le moindre relief, qui pourrait constituer une barrière de retenue d'eau. De façon schématique, l'invention a consisté à réajuster le pavillon 100 et chaque pièce support 106, et plus exactement l'extrémité 22 de raccordement de chaque pièce support 106, de manière à obtenir deux conduits 23 d'évacuation d'eau, de part et d'autre du pavillon 100, cette modification de l'extrémité de raccordement 22 permettant une soudure par laser en continu, au moyen d'un même cordon 24, des bords latéraux 112 et desdites extrémités 22 de raccordement aux cotés 3 d'habitacle. D'une certaine façon, la gorge 25 vient s'interposer entre la gorge 26 et la gorge 9.

## Revendications

1. Véhicule automobile doté d'un pavillon (1,100) arrière comprenant deux bords latéraux (4,112), soudés par laser à chacun des deux cotés (3) d'habitacle, ledit pavillon (1,100) étant prolongé vers l'avant par un toit (2) panoramique transparent, solidarisé à chaque coté (3) d'habitacle par une pièce support (6,106), soudée audit coté d'habitacle (3) de manière à former avec celui-ci, une première gorge (25) longitudinale, **caractérisé en ce que** les deux bords latéraux (112) du pavillon (100), forment, avec le coté d'habitacle (3), une deuxième gorge (26) longitudinale, se retrouvant dans le prolongement de ladite première gorge (25), de façon à former un conduit (23) d'évacuation d'eau continu, le pavillon (100) et ladite pièce support (106) étant soudés par laser au coté d'habitacle (3), avec le même cordon (24), et étant au contact l'un de l'autre.

2. Véhicule automobile selon la revendication 1, **caractérisé en ce que** les fonds de la première (25) et de la deuxième gorge (26) sont plans, et sont parfaitement alignés l'un par rapport à l'autre, de manière a ne présenter aucune cassure.

3. Véhicule selon l'une quelconque des revendications 1 ou 2, **caractérisé en ce que** le pavillon (100) présente un corps principal (111) et deux bords latéraux (112), joints chacun audit corps par un segment (113) sensiblement vertical, chacun desdits bords (112) latéraux se retrouvant à une altitude inférieure à celle dudit corps (111), et matérialisant le fond de la deuxième gorge (26).

4. Véhicule selon la revendication 3, **caractérisé en ce que** les bords latéraux (112) et le corps (111) principal du pavillon (100), sont plans et sensiblement horizontaux.

5. Véhicule selon l'une quelconque des revendications 3 ou 4, **caractérisé en ce que** chaque coté d'habitacle (3) présente un segment (16) qui émerge du bord (112) latéral du pavillon (100), de manière à constituer une paroi de la deuxième gorge (26), chaque bord latéral (112) du pavillon (100) étant soudé par laser, audit segment (16) émergeant du coté d'habitacle (3).

6. Véhicule selon l'une quelconque des revendications 1 à 5, **caractérisé en ce que** chaque pièce (106) support présente une face surélevée (118) sensiblement horizontale, et une face inférieure (119), sensiblement horizontale, et située sous la face surélevée (118), lesdites faces (118,119) étant reliées entre elles par un bord (120) sensiblement vertical, et ladite face inférieure (118) constituant le fond de la première gorge (25).

7. Véhicule selon la revendication 6, **caractérisé en ce que** chaque coté (3) d'habitacle présente un segment (16) qui émerge de la face inférieure (119) de la pièce support (106), de manière à constituer une paroi de la première gorge (25), chaque face (119) inférieure étant soudée par laser, audit segment (16) émergeant du coté (3) d'habitacle, avec le même cordon (24) que celui utilisé pour solidariser les bords latéraux (112) du pavillon (100) audit coté (3) d'habitacle.

8. Véhicule selon l'une quelconque des revendications 6 ou 7, **caractérisé en ce que** chaque pièce support (106) présente une zone de raccordement (22) avec le pavillon (100) et le coté d'habitacle (3), ladite zone (22) permettant de former la première gorge (25), et **en ce que** la longueur de ladite zone est inférieure à la longueur totale de ladite pièce support (10).

9. Véhicule selon la revendication 8, **caractérisé en ce que** le reste de la pièce support (106), qui ne définit pas la première gorge (25), est solidarisée au coté d'habitacle (3), par une soudure par points.

## Patentansprüche

1. Kraftfahrzeug, das mit einem hinteren Dach (1, 100) versehen ist, das zwei seitliche Ränder (4, 112) aufweist, die durch Laser an jede der zwei Fahrgastzellenseiten (3) geschweißt sind, wobei das Dach (1, 100) zur Vorderseite durch ein durchsichtiges Panoramadach (2) verlängert ist, das mit jeder Fahrgastzellenseite (3) durch ein Tragteil (6, 106) fest verbunden ist, das an die Fahrgastzellenseite (3) derart geschweißt ist, dass es mit dieser eine erste Längshohlkehle (25) bildet, **dadurch gekennzeichnet, dass** die zwei seitlichen Ränder (112) des Dachs (100) mit der Fahrgastzellenseite (3) eine zweite Längshohlkehle (26) bilden, die derart in der Verlängerung der ersten Hohlkehle (25) liegt, dass eine Leitung (23) zum ständigen Ableiten von Wasser gebildet ist, wobei das Dach (100) und das erste Tragteil (106) durch Laser an die Fahrgastzellenseite (3) mit derselben Schweißnaht (24) geschweißt und miteinander in Berührung sind.

2. Kraftfahrzeug nach Anspruch 1, **dadurch gekennzeichnet, dass** die Gründe der ersten (25) und der zweiten (26) Hohlkehle flach und zueinander perfekt derart ausgerichtet sind, dass sie keine Unterbrechung bilden.

3. Fahrzeug nach einem der Ansprüche 1 oder 2, **dadurch gekennzeichnet, dass** das Dach (100) einen Hauptkörper (111) und zwei seitliche Ränder (112) aufweist, die jeweils mit dem Körper durch ein im Wesentlichen vertikales Segment (113) verbunden sind, wobei sich die seitlichen Ränder (112) in einer Höhe befinden, die kleiner ist als die des Körpers (111) und den Grund der zweiten Hohlkehle (26) darstellen.

4. Fahrzeug nach Anspruch 3, **dadurch gekennzeichnet, dass** die seitlichen Ränder (112) und der Hauptkörper (111) des Dachs (100) flach und im Wesentlichen horizontal sind.

5. Fahrzeug nach einem der Ansprüche 3 oder 4, **dadurch gekennzeichnet, dass** jede Fahrgastzellenseite (3) ein Segment (16), das von dem seitlichen Rand (112) des Dachs (100) austritt, aufweist, um eine Wand der zweiten Hohlkehle (26) zu bilden, wobei jeder seitliche Rand (112) des Dachs (100) durch Laser an das auf der Fahrgastzellenseite (3) austretende Segment (16) geschweißt ist.

6. Fahrzeug nach einem der Ansprüche 1 bis 5, **dadurch gekennzeichnet, dass** jedes Tragteil (106) eine im Wesentlichen horizontale überhöhte Seite (118) und eine im Wesentlichen horizontale untere Seite (119) aufweist und unter der überhöhten Seite (118) liegt, wobei die Seiten (118, 119) untereinander durch einen im Wesentlichen senkrechten Rand (120) verbunden sind und die untere Seite (118) den Grund der ersten Hohlkehle (25) bildet.

7. Fahrzeug nach Anspruch 6, **dadurch gekennzeichnet, dass** jede Fahrgastzellenseite (3) ein Segment (16) aufweist, das von der unteren Seite (119) des Tragteils (106) derart austritt, dass es eine Wand der ersten Hohlkehle (25) bildet, wobei jede untere Seite (119) durch Laser an das Segment (16), das aus der Fahrgastzellenseite (3) austritt, mit derselben Schweißnaht (24) wie die geschweißt ist, die zum festen Verbinden der seitlichen Ränder (112) des Dachs (100) mit der Fahrgastzellenseite (3) dient.

8. Fahrzeug nach einem der Ansprüche 6 oder 7, **dadurch gekennzeichnet, dass** jedes Tragteil (106) einen Anschlussbereich (22) mit dem Dach (100) und der Fahrgastzellenseite (3) bildet, wobei es der Bereich (22) erlaubt, die erste Hohlkehle (25) zu bilden, und dass die Länge des Bereichs kleiner ist als die Gesamtlänge des Tragteils (106).

9. Fahrzeug nach Anspruch 8, **dadurch gekennzeichnet, dass** der Rest des Tragteils (106), der die erste Hohlkehle (25) nicht definiert, fest mit der Fahrgastzellenseite durch eine Heftschweißung verbunden ist.

## Claims

1. A motor vehicle having a rear roof (1, 100) including two side edges (4, 112) that are laser-welded to each of the two passenger compartment sides (3), said roof (1, 100) being extended to the front by a transparent panoramic roof (2) that is secured to each passenger compartment side (3) by a mounting part (6, 106) welded to said passenger compartment side (3) so as to form, with the latter, a first longitudinal groove (25), **characterized in that** both side edges (112) of the roof (100) form, with the passenger compartment side (3), a second longitudinal groove (26) situated in the extension of said first groove (25) so as to form a continuous water-draining channel (23), the roof (100) and said mounting part (106) being laser-welded to the passenger compartment side (3), with the same back strip (24), and being in contact with each other.

2. The motor vehicle according to Claim 1, **characterized in that** the bottoms of the first (25) and second (26) groove are flat, and are perfectly aligned one with respect to the other, so as not to present any break.

3. The vehicle according to any one of Claims 1 or 2, **characterized in that** the roof (100) has a main body (111) and two side edges (112), each joined to said body by a substantially vertical segment (113), each of said side edges (112) being situated at a lower height than that of said body (111), and representing the bottom of the second groove (26).

4. The vehicle according to Claim 3, **characterized in that** the side edges (112) and the main body (111) of the roof (100) are flat and substantially horizontal.

5. The vehicle according to any one of Claims 3 or 4, **characterized in that** each passenger compartment side (3) has a segment (16) which emerges from the side edge (112) of the roof (100), so as to constitute a wall of the second groove (26), each side edge (112) of the roof (100) being laser-welded to said segment (16) emerging from the passenger compartment side (3).

6. The vehicle according to any one of Claims 1 to 5, **characterized in that** each mounting part (106) has a substantially horizontal elevated face (118), and a lower face (119), substantially horizontal, and situated beneath the elevated face (118), said faces (118, 119) being connected with one another by a substantially vertical edge (120), and said lower face (118) constituting the bottom of the first groove (25).

7. The vehicle according to Claim 6, **characterized in that** each passenger compartment side (3) has a segment (16) which emerges from the lower face (119) of the mounting part (106), so as to constitute a wall of the first groove (25), each lower face (119) being laser-welded to said segment (16) emerging from the passenger compartment side (3), with the same back strip (24) as the one used for securing the side edges (112) of the roof (100) to said passenger compartment side (3).

8. The vehicle according to any one of Claims 6 or 7, **characterized in that** each mounting part (106) has a connection zone (22) with the roof (100) and the passenger compartment side (3), said zone (22) making it possible to form the first groove (25), and **in that** the length of said zone is less than the total length of said mounting part (10).

9. The vehicle according to Claim 8, **characterized in that** the remainder of the mounting part (106), which does not define the first groove (25), is secured to the passenger compartment side (3) by spot welding.
